# EUROPEAN PATENT SPECIFICATION

(11) **EP 0 668 141 B1**
(45) Date of publication and mention of the grant of the patent: **02.01.2002**
(21) Application number: 95101087.5
(22) Date of filing: 26.01.1995
(51) Int. Cl.: B29C 45/28

(54) **Injection molding valve member sealing bushing with thin collar portion**
Abdichtungsbüchse für Ventil im Spritzgiessen mit dünnem Kragenteil
Douille d'étanchéité pour valve dans le moulage par injection avec partie de collerette mince

(30) Priority: 14.02.1994 CA 2115613
(43) Date of publication of application: 23.08.1995
(73) Proprietor: Gellert, Jobst Ulrich, Georgetown Ontario L7G 2X1 (CA)
(72) Inventor: Gellert, Jobst Ulrich, Georgetown Ontario L7G 2X1 (CA)
(74) Representative: Grünecker, Kinkeldey, Stockmair & Schwanhäusser Anwaltssozietät

(56) References cited:
- EP-A- 0 099 088
- EP-A- 0 321 678
- EP-A- 0 407 683
- DE-A- 3 237 924
- FR-A- 2 135 204
- US-A- 5 067 893
- US-A- 5 192 556

## Description

The present invention relates to a multi-cavity valve gate injection molding apparatus according to the preamble of independent claim 1.

A multi-cavity valve gate injection molding apparatus as indicated above is known from prior art document EP-A-0 407 682. Said multi-cavity valve gate injection apparatus comprises a pneumatic actuating mechanism to reciprocate the respective elongated valve member. Said mechanism includes a piston which reciprocates in a cylindrical opening formed in a cylinder plate. A sealing bushing is mounted around each valve member and has a flange portion which bridges an insulative air gap between the manifold and the cylinder plate. Said sealing bushing forms part of the piston/cylinder means as well as sealing against melt leakage around the reciprocating valve member.

According to one embodiment which can be taken from said prior art document, each sealing bushing has a central bore which matches and extends in alignment with a smaller diameter portion in the transverse bore through the manifold. The valve member fits snugly through said central bore of the sealing bushing and the smaller diameter portion of the transverse bore through the manifold. Said smaller diameter portion prevents leakage of the melt as the valve member reciprocates between a retracted open position and the forward close position. Thus, the elongated valve member extends through the aligned bore of the nozzle, the manifold, and the sealing bushing.

Furthermore, according to a further embodiment of said prior art document EP-A-0 407 683 A2, the respective sealing bushing is formed as a plug means and is located in an opening extending through the manifold. Said sealing bushing also has a flange portion which extends into bearing contact against a front surface of the cylinder plate. Each sealing bushing has a melt duct which splits into two smoothly curved arms to connect a branching channel with the bore of the valve member. Said sealing bushing has a front surface being directly in contact with the rear surface of the respective heated nozzle. The melt duct formed in said sealing bushing is in alignment with the respective melt duct formed in said heated nozzle.

Valve gated injection molding systems having a valve member sealing bushing are well known. In fact, the applicant's U.S. Patent Number 4,433,969 which issued February 28, 1984 shows a sealing bushing with a collar portion which extends rearwardly into the manifold to lengthen the sealing contact between the valve member and the sealing bushing. However, in this previous configuration the bushing is located between the manifold and the nozzle which has the disadvantage that additional mold height is required. The applicant's U.S. Patent Number 4,521,179 which issued June 4, 1985 has the bushing seated in the nozzle which has the disadvantage of being more costly to manufacture. U.S. Patent Number 4,740,151 to Schmidt et al. which issued April 26, 1988 shows a sealing and retaining bushing which extends rearwardly from the manifold to lengthen the sealing contact. With the demand for more and more compact molds, it is very desirable that the sealing contact between the sealing bushing and the valve member be as long as possible while the height of the mold is as short as possible. Furthermore, none of these previous arrangements are able to utilize the pressure of the melt to improve the seal of the sealing bushing around the reciprocating valve member.

From prior art document U.S. 5,192,556 a molding system for delivering melt under pressure through a flow passageway into a mold cavity is known. Said system includes a distributing plate including a distribution channel for conveying a plastic melt, a nozzle including a mold channel therein which communicates with the distribution channel and a mold cavity communicating with the mold channel. A connecting channel is provided for connecting the distribution channel with the mold channel. In particular, said system comprises a stationary mold plate being separated from a manifold plate by a hot runner, wherein an air gap is provided between the manifold plate and the hot runner. Said hot runner manifold or distributing plate contains a transverse manifold channel or distribution channel which is fed with the desired molten plastic. Said manifold or distribution channel communicates with and feeds molten plastic to a nozzle channel in the respective nozzle. Within said hot inner a valve bushing is mounted. The molten plastic flows from the distribution channel to a nozzle channel via a connecting channel. Said connecting channel is formed by machining a lower surface of the valve bushing in combination with the shape machined in the hot runner. The connecting channel includes a flow entry portion, a ring portion or a reservoir portion, a flow restriction portion and an exit channel. Said valve bushing has a substantial conical tip adjacent to said exit channel to ensure that the melt is transferred substantially equally from the flow restriction portion to the exit channel and then to the nozzle channel to prevent any degradation from a dead spot.

From prior art document EP-A 0 099 088 a multi-cavity valve gate injection molding apparatus having a plurality of heated nozzles seated in a mold is known. A melt distribution manifold is located at the rear ends of the heated nozzles. A melt passage is branching in the melt distribution manifold and extending to respective central bores in each heated nozzle to convey melt to the respective gate. An elongated valve member having a front end and a rear end is extending through the central bore of each nozzle and the rear end of the valve member is driven by a valve member driving means to reciprocate the valve member between a retracted open position and a forward closed position in which the front end of the valve member is seated in the gate. The valve member driving means comprises a cylinder plate which is located rearwardly from the melt distribution manifold and spaced apart thereof by an insulative air space and a plurality of valve member sealing bushings each being mounted rearwardly of the respective heated nozzle. Each sealing bushing has a valve member bore extending therethrough in alignment with the central bore of the respective nozzle, whereby each elongated valve member extends through the valve member bore in the sealing bushing into the melt passage in alignment with the respective gate. In said multi-cavity valve gate injection molding apparatus according to the prior art, the valve bushings or valve member sealing bushings are in sealing contact with a forwardly directed surface of a manifold plate and a collar portion integrally formed with the valve pin bushing extending into an opening in the manifold plate, wherein a surrounding space is provided between the portion and said opening. The valve pin actuating mechanism has a hydraulically driven piston which reciprocates in a cylinder. The valve pin extends through a central hole in the piston and its enlarged head is secured to the piston by a plug which is screwed slightly down on top of it. The cylinder is seated in the back plate.

From prior art document US 5,067,893 a single cavity molding apparatus is known. Said prior art teaches an injection molding apparatus comprising a heated nozzle having a valve member which is slidingly fitted in a valve member bore of the valve member sealing bushing. On said valve member bushing a thin sleeve is provided which surrounds the valve member, wherein said sleeve of the valve member sealing bushing extends in a mold passage. The sleeve sealingly grips the outside of the valve member or valve pin if pressurized melt is present in the centric bore forming the mold passage to provide a sealing contact between the sleeve and the valve member. The rear portion of the valve member is formed with a series of gear teeth forming a rack on one side thereof which is engaged with a pinion gear. Said pinion gear is driven to move the valve member slidingly within the valve member sealing bushing. Said rear portion of the valve member is received in a center space of an upper part also receiving a melt supply passage. The valve member sealing bushing is integrally formed with an annular piece which is provided at the rear end thereof and seated at a lower end of the center space.

From prior art document DE 3 237 924 a closable nozzle for an injection molding apparatus is known. Said apparatus comprises a closing pin slidingly received in the sealing bushing. Said sealing bushing is fitted into a nozzle body and comprises a thin wall portion extending into a valve passage, wherein said thin wall or flexible portion is pressed to the closing pin in accordance with the pressure of the melt within the melt passage to improve sealing property between the pin and the bushing. The closing pin is provided with an enlarged head formed at the rear end thereof. Said rear end extends into a chamber provided upwardly with regard to the nozzle body and the sealing bushing. A lever arrangement is engaged with said enlarged head for drivingly moving the closing pin.

It is an objective of the present invention to provide a multi-cavity gate injection molding apparatus as indicated above that has an improved sealing property and a low number of elements.

According to the present invention this objective is solved by a multi-cavity gate injection molding apparatus according to independent claim 1.

Preferably said sealing bushing is made of steel.

Hereinafter the present invention is illustrated and explained by means of a preferred embodiment in conjunction with the accompanying drawings. In the drawings wherein:
Figure 1 is a partial sectional view of a portion of a single-cavity injection molding system or apparatus according to an embodiment which does not fall under the scope of the independent claim,
Figure 2 is a larger sectional view of a portion of the apparatus seen in Figure 1 taken at 90° to the sectional view seen in Figure 1, and
Figure 3 is a partial sectional view of a portion of a multi-cavity injection molding apparatus according to an embodiment of the invention.

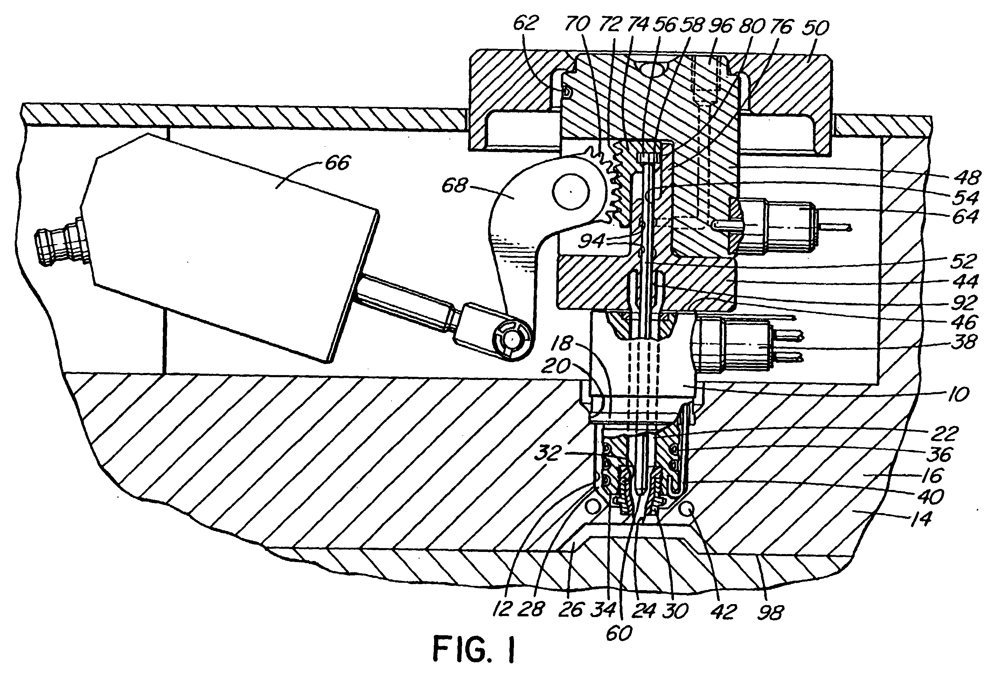

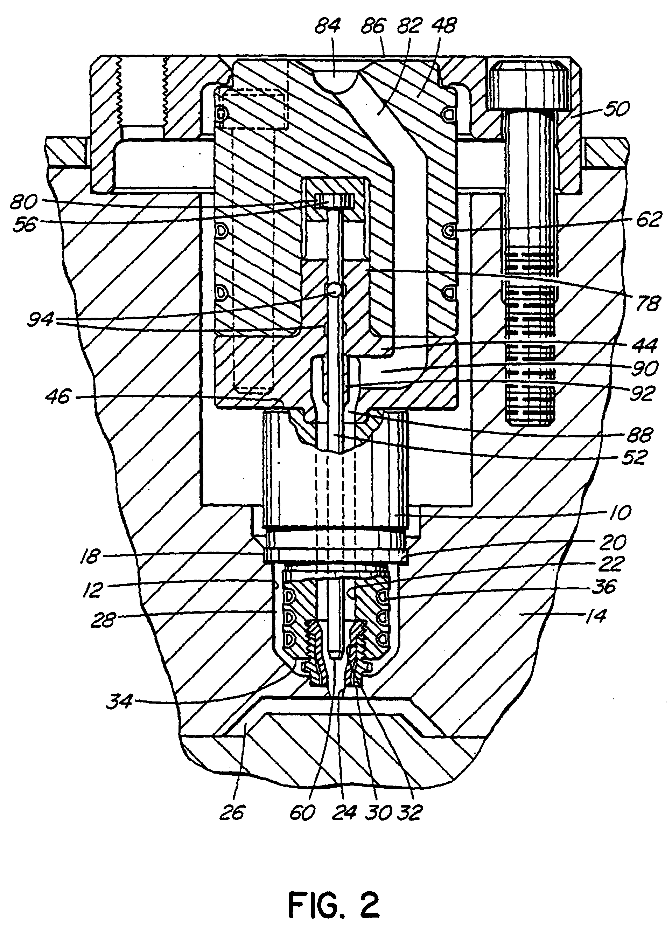

Reference is first made to Figures 1 and 2 which show a single-cavity apparatus, which does not fall under the scope of the independent claim, with a nozzle 10 seated in a well 12 in a cavity plate 14. While the mold 16 usually has a greater number of plates depending upon the application, in this case only a cavity plate 14 is shown for ease of illustration. The nozzle 10 has a circular locating flange 18 which sits on a circular shoulder 20 in the well 12 to accurately locate the nozzle 10 with its central bore 22 in alignment with the gate 24 extending through the cavity plate 14 to a cavity 26. This also provides an insulative air space 28 between the nozzle 10 and the surrounding cavity plate 14. In this configuration, a removable two-piece nozzle seal 30 is screwed into a threaded seat 32 in the front end 34 of the nozzle 10 to bridge the insulative air space 28 around the gate 24. The nozzle 10 is heated by an integral electrical heating element 36 which has an external terminal 38 and extends around the central bore 22. The operating temperature of the nozzle 10 near the gate 24 is monitored by a thermocouple element 40 which extends into the front end 34 of the nozzle 10. The cavity plate 14 is cooled by pumping cooling water through cooling conduits 42.

A steel sealing bushing 44 which will be described in more detail below is mounted between the rear end 46 of the nozzle 10 and a steel manifold 48 which is secured in place by a locating ring 50. An elongated valve member 52 extends through a valve member bore 54 in the sealing bushing 44 into the central bore 22 of the nozzle 10 in alignment with the gate 24. The elongated valve member 52 has an enlarged head 56 at its rear end 58 and a tapered front end 60 which seats in the gate 24 in the forward closed position. The manifold 48 is also heated by an integral electrical heating element 62 extending from an external terminal 64.

As described in the applicant's U.S. Patent No. 4,919,606 which issued April 24, 1990, the elongated valve member 52 is reciprocated between a forward closed position and a rearward open position by a rack and pinion actuating mechanism. A double-acting pneumatic cylinder 66 pivots a pinion member 68 which has teeth 70 engaging teeth 72 on a rack member 74. The rack member 74 and a rearwardly projecting portion 76 of the sealing bushing 44 are received in a slot 78 in the manifold 48 in which the rack member 74 is driven longitudinally by the pinion member 68. The head 56 of the valve member 52 is received in a T-slot 80 in the rack member 74 so that it moves longitudinally with the rack member 74.

A melt passage 82 extends from a central inlet 84 at the rear end 86 of the heated manifold 48 to convey melt through the sealing bushing 44 and the heated nozzle 10 to the gate 24. As seen in Figure 2, in this single-cavity configuration, the melt passage 82 extends outwardly around the slot 78 in the manifold 48 in which the rack member 74 slides. The melt passage 82 has a longitudinal portion 88 which extends forwardly around the valve member 52 from the sealing bushing 44 through the central bore 22 in the nozzle 10 and a radial portion 90 which extends inwardly to join the longitudinal portion 88 in the sealing bushing 44. The elongated valve member 52 extends into the melt passage 82 in the sealing bushing 44 and in order to avoid a problem of the pressurized melt leaking rearwardly along the reciprocating valve member 52, the sealing bushing 44 has a collar portion 92 which extends forwardly into the melt passage 82 around the valve member 52. The collar portion 92 of the sealing bushing 44 fits around the valve member 52 to form a seal against substantial leakage of melt rearwardly along the reciprocating valve member 52. The sealing bushing 44 does have circumferential grooves 94 which extend around the valve member 52 and are vented to atmosphere through a vent duct 96 to relieve any build up of seepage and provide for the escape of any corrosive gases which are generated by the decomposition of any melt which is trapped around the valve member 52 and subjected to shearing action by the reciprocal movement of the valve member 52. The collar portion 92 of the steel sealing bushing 44 is sufficiently thin that as the pressure of the melt surrounding it in the melt passage 82 is increased during injection, it is slightly compressed around the valve member 52 to improve the seal against melt leakage. Also, the length of the valve member bore 54 through the sealing bushing 44 is extended by the distance the thin collar portion 92 extends forwardly into the melt passage 82 which also improves the seal around the reciprocating valve member 52.

In use, the system is assembled as shown and electrical power is applied to the terminals 38, 64 of the heating elements 36, 62 to heat the nozzle 10 and the manifold 48 to a predetermined operating temperature. Pressurized melt from a molding machine (not shown) is introduced into the melt passage 82 through the central inlet 84 according to a predetermined cycle and controlled pneumatic pressure is applied to operate the cylinder 66 according to a matching cycle. When the cylinder 66 pivots the pinion member 68 to the open position shown in Figure 1, the rack member 74 and the valve member 52 slide rearwardly to withdraw the front end 60 from the gate 24. The pressurized melt flows from the melt passage 82 through the gate 24 and fills the cavity 26. After the cavity 26 is filled, injection pressure is held long enough to pack the molded part and then released. The cylinder 66 then pivots the pinion member 68 to the closed position which causes the rack member 74 and the valve member 52 to slide forwardly until the front end 60 is seated in the matching gate 24. After a short cooling period, the mold is opened along the parting line 98 to eject the molded product. After ejection, the mold is closed, pneumatic pressure is applied to the cylinder 66 to withdraw the valve member 52 to the open position, and injection pressure is reapplied to refill the cavity 26. This cycle is repeated continuously with a frequency dependent upon the size of cavity and type of material being molded. Having the thin collar portion 92 of the sealing collar 44 extend forwardly adds to the length of the valve member bore 54 through the sealing bushing 44 without adding to the height of the mold 16. Also, it allows the pressure of the melt surrounding the collar portion 92 to be utilized to improve the seal around the valve member 52.

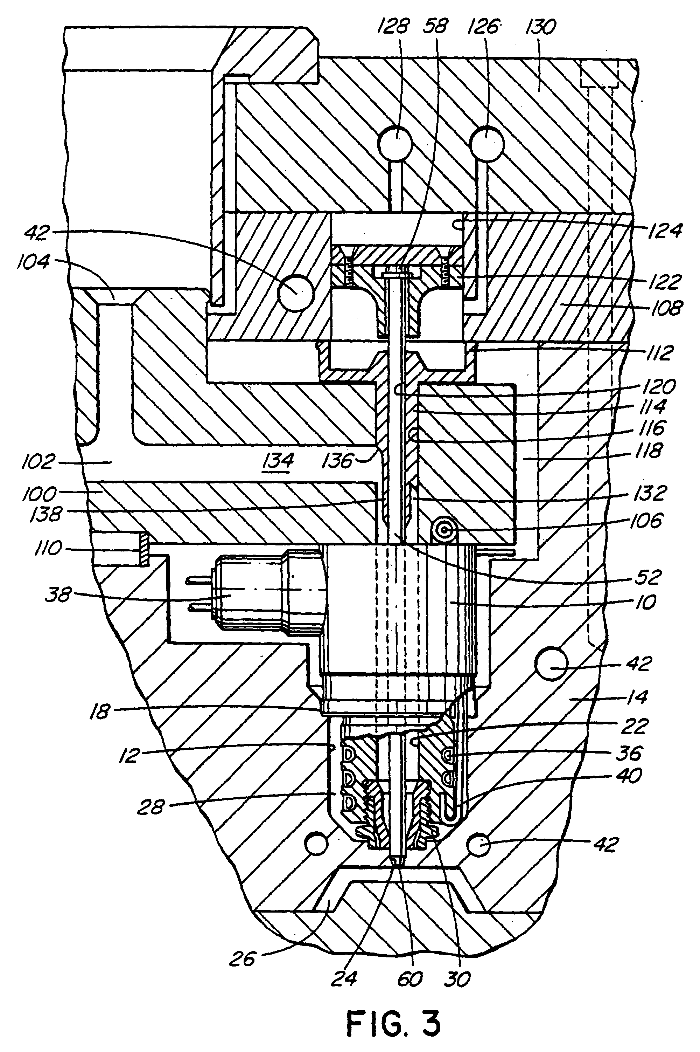

Reference is now made to Figure 3 to describe the embodiment of the invention. As many of the elements are the same as those described above, common elements are described and illustrated using the same reference numerals. In this multi-cavity apparatus, a steel melt distribution manifold 100 bridges the rear ends 46 of a number of nozzles 10 and the melt passage 102 extending from a central inlet 104 branches in the manifold 100 to convey melt through each nozzle 10 to the respective gates 24. The melt distribution manifold 100 is heated by an integral electrical heating element 106. It is mounted between the cavity plate 14 and a cylinder plate 108 by a central locating ring 110 and by the flange portion 112 of a sealing bushing 114 seated in an opening 116 through the manifold 100 in alignment with each of the nozzles 10. Thus, an insulative air space 118 is provided between the heated manifold 100 and the surrounding cooled cavity plate 14 and cylinder plate 108.

Each elongated valve member 52 extends through a valve member bore 120 through the sealing bushing 114 and its rear end 58 is connected to a piston 122 seated in a cylinder 124 in the cylinder plate 108. Controlled air pressure is applied to opposite sides of the piston 122 through air ducts 126, 128 extending through a back plate 130 to reciprocate the valve member 52 between a retracted open position and the forward closed position shown in which its front end 60 is seated in the gate 24. While a pneumatic actuating mechanism is shown for ease of illustration, of course hydraulic actuating mechanisms are used for many applications.

Each sealing bushing 114 fits tightly in the opening 116 through the manifold 100. The melt passage 102 has a longitudinal portion 132 extending forwardly around the valve member 52 from each branch portion 134 extending in the distribution manifold 100. The sealing bushing 114 has an angled face 136 from which a thin collar portion 138 extends forwardly into the melt passage 102 around the valve member 52. As described above, the thin collar portion 138 fits around the valve member 52 to provide a seal against leakage of melt rearwardly along the valve member 52 as it reciprocates. This seal is improved by the length of the valve member bore 120 being extended by the distance the collar portion 138 extends forwardly into the melt passage 102. The collar portion 138 is sufficiently thin that injection pressure of the melt surrounding it in the melt passage 102 compresses it slightly around the valve member 52 to improve the seal against melt leakage around the reciprocating valve member 52. For some applications, it is not necessary that the collar portion 138 be thin enough to be compressible around the valve member 52, but it must be thin enough not to unduly impede melt flow around it in the melt passage 102. As mentioned above, the sealing bushing 114 has a circular flange portion 112 which extends rearwardly to abut against the cylinder plate 108. The sealing bushing 114 can be retained in the opening 116 in the manifold 100 by a shoulder or other suitable means. The sealing bushing can be a larger diameter plug seated in the manifold which forms the portion of the melt passage into which the thin collar portion 138 extends. The injection cycle of this embodiment of the invention is similar to that described above and its description need not be repeated.

## Claims

1. Multi-cavity valve gate injection molding apparatus having a plurality of heated nozzles (10) seated in a mold, the heated nozzles (10) having each a rear end and a central bore (22) extending therethrough in alignment with a respective gate (24) in the mold leading to a respective cavity (26), a melt distribution manifold (100) is located at the rear ends of the heated nozzles (10), a melt passage (102) branching in the melt distribution manifold (100) and extending to the respective central bores (22) in each heated nozzle (10) to convey melt to the respective gate (24), an elongated valve member (52) having a front end (60) and a rear end (58) extending through the central bore (22) of each nozzle (10), the rear end (58) of the valve member (52) being driven by a valve member driving means to reciprocate the valve member between a retracted open position and a forward closed position in which the front end (60) of the valve member (52) is seated in the gate (24), the valve member driving means comprises a cylinder plate (108) which is located rearwardly from the melt distribution manifold (100) and spaced apart thereof by an insulative air space (118) and a plurality of sealing bushings (114) each being mounted rearwardly of the respective heated nozzle (10) and surrounding the valve member (52), each sealing bushing (114) has a valve member bore (120) extending therethrough in alignment with the central bore (22) of the respective nozzle (10), whereby each elongated valve member (52) extends through the valve member bore (120) in the sealing bushing (114) into the melt passage (102) in alignment with the respective gate (24), each sealing bushing (114) fits tightly in a respective opening (116) of the manifold (100) and has further a flange portion (112) which extends rearwardly to bridge the insulative air space (118), the flange portion (112) is in sealing contact with the cylinder plate (108) and is part of a cylinder chamber (124) of the respective valve member driving means **characterized in that** each sealing bushing (114) comprises an angled face (136) forming a part of the melt passage (102) at an opening of a branch portion (134) of said melt passage (102) and a thin collar portion (138) extending from said angled face (136) a predetermined distance forwardly of said opening of the branch portion (134) into a longitudinal portion (132) of the melt passage (102) recessed in the melt distribution manifold (100) and fittingly surrounds the respective valve member (52), said collar portion (138) of the sealing bushing (114) being sufficiently thin whereby injection pressure of the surrounding melt in the melt passage (102) in the manifold (100) compresses the collar portion (138) of each sealing bushing (114) around the respective valve member (52) to form a seal against substantial leakage of melt rearwardly along the reciprocating valve member (52), said sealing bushing (114) comprising said flange portion (112) and said thin collar portion (138) as an integral member.

2. Multi-cavity valve gate injection molding apparatus according to claim 1 **characterized in that** said sealing bushing (114) is made of steel.

## Patentansprüche

1. Mehrfachform-Ventilanschnitts-Spritzgießvorrichtung, die eine Mehrzahl von beheizten Düsen (10) aufweist, die in einer Form sitzen, wobei die beheizten Düsen (10) jeweils ein hinteres Ende und eine Mittelbohrung (22) aufweisen, die sich durch diese hindurch in Ausrichtung mit einem jeweiligen Anschnitt (24) in der Form erstreckt, der zu einem jeweiligen Formhohlraum (26) führt, ein Schmelzeverteilungsverteiler (100) ist an den hinteren Enden der beheizten Düsen (10) angeordnet, Schmelzekanal (102), der sich in den Schmelzeverteilungsverteiler (100) verzweigt und sich in die jeweiligen Mittelbohrungen (22) in jeder beheizten Düse (10) erstreckt, um Schmelze zu dem jeweiligen Anschnitt (24) zu fördern, ein langgestrecktes Ventilteil (52), das ein vorderes Ende (60) und ein hinteres Ende (58) aufweist, die sich durch die Mittelbohrung (22) jeder Düse (10) erstrecken, wobei das hintere Ende (58) des Ventilteiles (52) durch eine Ventilteil-Antriebseinrichtung angetrieben ist, um das Ventilteil zwischen einer zurückgezogenen Offen-Stellung und einer vorgeschobenen Schließ-Stellung, in der das vordere Ende (60) des Ventilteils (52) in dem Anschnitt (24) einsitzt, hin- und hergehend bewegbar ist, wobei die Ventilteil-Antriebseinrichtung eine Zylinderplatte (108) aufweist, die rückwärts von dem Schmelzeverteilungsverteiler (100) angeordnet ist und beabstandet von diesem durch einen isolierenden Luftraum (118) und eine Mehrzahl von Dichtungshülsen (114) ist, die jeweils hinter der jeweiligen beheizten Düse (10) angeordnet sind und das Ventilteil (52) umgeben, wobei jede Dichtungshülse (114) eine Ventilteilbohrung (120) aufweist, die sich durch diese hindurch in Ausrichtung mit der Mittelbohrung (22) der jeweiligen Düse (10) erstreckt, wobei jedes langgestreckte Ventilteil (52) sich durch die Ventilteilbohrung (120) in der Dichtungshülse (114) in den Schmelzekanal (102) in Ausrichtung mit dem jeweiligen Anschnitt (24) erstreckt, jede Dichtungshülse (114) fest in eine jeweilige Öffnung (116) des Verteilers (100) paßt und einen weiteren Flanschabschnitt (112) aufweist, der sich rückwärts erstreckt, um den isolierenden Luftraum (118) zu überbrücken, wobei der Flanschabschnitt (112) in Dichtungskontakt mit der Zylinderplatte (108) ist und Teil einer Zylinderkammer (124) der jeweiligen Ventilteil-Antriebseinrichtung ist, **dadurch gekennzeichnet, daß** jede Dichtungshülse (114) eine abgewinkelte Fläche (136) aufweist, die einen Teil des Schmelzekanales (102) an einer Öffnung eines Verzweigungsabschnittes (134) des Schmelzekanales (102) bildet und sich ein dünner Kragenabschnitt (138) von der abgewinkelten Fläche (136) eine bestimmte Strecke vorwärts der Öffnung des Verzweigungsabschnittes (134) in einen Längsabschnitt (132) des Schmelzekanales (102) erstreckt, ausgespart in dem Schmelzeverteilungsverteiler (100) und passend eingesetzt das jeweilige Ventilteil (52) umgibt, wobei der Kragenabschnitt (138) der Dichtungshülse (114) ausreichend dünn ist, wodurch Spritzgießdruck der umgebenden Schmelze in dem Schmelzekanal (102) in dem Verteiler (100) den Kragenabschnitt (138) jeder Dichtungshülse (114) rund um das jeweilige Ventilteil (52) komprimiert, um eine Dichtung gegen wesentliche Leckage von Schmelze nach hinten entlang des hin- und hergehenden Ventilteiles (52) zu bilden, wobei die Dichtungshülse (114) den Flanschabschnitt (112) und den dünnen Kragenabschnitt (138) als ein integrales Teil aufweist.

2. Mehrfachform-Ventilanschnitts-Spritzgießvorrichtung nach Anspruch 1, **dadurch gekennzeichnet, daß** die Dichtungshülse (114) aus Stahl besteht.

## Revendications

1. Dispositif de moulage par injection à porte à valve multi-cavité, ayant une pluralité de buses (10) chauffées, montées dans un moule, les buses (10) chauffées ayant chacune une extrémité arrière et un perçage central (22) s'étendant à travers elles, en alignement avec une porte (24) respective dans le moule, menant à une cavité (26) respective, un élément de distribution de masse fondue (100) et disposé aux extrémités arrière des buses (10) chauffées, un passage de masse fondue (102) se ramifiant dans l'élément de distribution de masse fondue (100) et s'étendant vers les perçages centraux (22) respectifs dans chaque buse (10), chauffée afin de véhiculer la masse fondue vers la grille respective, un élément formant valve (52) allongée, ayant une extrémité avant (60) et une extrémité arrière (58) s'étendant par le perçage central (22) de chaque buse (10), l'extrémité arrière (58) de l'élément formant valve (22) étant entraîné par des moyens d'entraînement formant valve, pour faire effectuer par l'élément formant valve un déplacement dans un sens et dans l'autre, entre une position ouverte et rétractée et une position fermée avant à laquelle l'extrémité avant (60) de l'élément formant valve (52) est monté dans la porte (24), les moyens d'entraînement formant valve comprenant une plaque de cylindre (108) qui est placée à l'arrière de l'élément de distribution de masse fondue (100) et espacée de celui-ci par un espace d'air (118) isolant et d'une pluralité de douilles d'étanchéité (114), chacune montée à l'arrière de la buse (10) chauffée respective et entourant l'élément formant valve (52), chaque douille d'étanchéité (114) ayant un perçage pour élément formant valve (120) s'étendant à travers elle, en alignement avec le perçage central (22) de la buse (10) respective, de manière que chaque élément formant valve (52) allongé s'étende à travers l'élément formant valve (120) dans la douille d'étanchéité (114) à l'intérieur du passage de masse fondue (102), en alignement avec la porte (24) respective, chaque douille d'étanchéité (114) s'ajustant de façon serrée dans une ouverture (116) respective du distributeur (100) et ayant en outre une partie formant bride (112) s'étend à l'arrière pour ponter l'espace d'air (118), isolant, la partie formant bride (112) étant en contact d'étanchéité avec la plaque de cylindre (108) et fait partie d'une chambre de cylindre (124) des moyens d'entraînement d'élément formant valve respectif, **caractérisé en ce que** chaque douille d'étanchéité (114) comprend une surface inclinée (136) faisant partie du passage de masse fondue (102), en une ouverture d'une partie de ramification (134) dudit passage de masse fondue (102) et une partie formant collerette (138), s'étendant depuis ladite surface inclinée (136) sur une distance prédéterminée vers l'avant de ladite ouverture de la partie de ramification (134) en une partie longitudinale (132) du passage de masse fondue (102) logée dans l'élément de distribution de masse fondue (100) et entourant de façon ajustée l'élément formant valve (52) respectif, ladite partie formant collerette (138) de la douille d'étanchéité (114) étant suffisamment mince, de manière que la pression d'injection de la masse fondue environnante, située dans le passage à masse fondue (102) dans le distributeur (100), comprime la partie formant collerette (138) de chaque douille d'étanchéité (114) autour de l'élément formant valve (52) respectif pour former un joint d'étanchéité empêchant toute fuite substantielle de masse fondue vers l'arrière, le long de l'élément formant valve (52) à déplacement alternatif, ladite douille d'étanchéité (114) comprenant ladite partie formant bride (112) et ladite partie formant collerette (138) mince, réalisées d'une seule pièce.

2. Dispositif de moulage par injection à porte de valve multi-cavité selon la revendication 1, **caractérisé en ce que** ladite douille d'étanchéité (114) est en acier.
